# EUROPÄISCHE PATENTSCHRIFT

(11) **EP 0 857 755 B1**
(45) Veröffentlichungstag und Bekanntmachung des Hinweises auf die Patenterteilung: **09.10.2002**
(21) Anmeldenummer: 98101711.4
(22) Anmeldetag: 02.02.1998
(51) Int. Cl.: C08L 23/10

(54) **Verwendung von thermoplastischen Elastomeren zur Verbesserung der Stabilität von Polyolefinen gegenüber ionisierender Strahlung**
Use of thermoplastic elastomers to improve the stability of polyolefins against ionising radiation
Utilisation de elastomeres thermoplastiques pour l'amélioration de la stabilité contre radiation ionisante

(30) Priorität: 11.02.1997 AT 21197
(43) Veröffentlichungstag der Anmeldung: 12.08.1998
(73) Patentinhaber: Borealis GmbH, 2323 Schwechat-Mannswörth (AT)
(72) Erfinder: Wolfschwenger, Johannes, Ing., 4491 Niederneukirchen (AT); Bernreitner, Klaus, Dipl.-Ing., 4020 Linz (AT)
(74) Vertreter: VA TECH Patente GmbH & Co

(56) Entgegenhaltungen:
- EP-A- 0 114 964
- EP-A- 0 400 333
- WO-A-96/15757

## Beschreibung

Die vorliegende Erfindung betrifft die Verwendung von thermoplastischen Elastomeren als Zusatzkomponenten bzw. Modifikatoren zu Polyolefinen zur Verbesserung der Stabilität gegenüber ionisierender Strahlung.
Polyolefine haben aufgrund ihrer günstigen Kombination von Kosten und technologischen Eigenschaften in den vergangenen Jahrzehnten eine zunehmend breite Anwendung in verschiedensten Segmenten gefunden. Dies hat allerdings auch zu ständig steigenden Anforderungen an das Material und, in der Folge zu ständigen Verbesserungen und Erweiterungen des Eigenschaftsspektrums geführt. Dies ermöglichte auch den Einsatz von beispielweise Polypropylenen im medizinisch / pharmazeutischen Bereich, wo sich der hohe Schmelzpunkt, welcher eine Heißdampf-Sterilisation bei 121 °C problemlos ermöglicht, positiv auswirkt. Als negativ erweist sich hier allerdings die schlechte Eignung von Polypropylenen zur Sterilisation mittels ionisierender Strahlung, wie z.B.mittels β- oder γ-Strahlen, Röntgenstrahlen, etc, vor allem deshalb, da diese Methode zunehmende Bedeutung und Verbreitung findet.

Die Bestrahlung führt bei Polyolefinen im Normalfall zu mehreren negativen Effekten: Molmassenabbau (Anstieg des Schmelzflußindex/MFI), Verfärbung bzw. Vergilbung und Versprödung. Der Grund dafür ist vor allem die Auslösung von Radikalreaktionen im Polymer durch die Strahlung, welche auch von üblichen Stabilisatorsystemen nicht mehr effektiv eingedämmt werden können. Ein Überblick zur Stabilisierung von Polyolefinen ist z.B. in "Kunststoffadditive", 3. Ausgabe, erschienen im Hanser-Verlag gegeben. Es wurden daher in der Vergangenheit verschiedene Versuche unternommen, diese negativen Effekte durch spezielle Ausrüstung von Polyolefinen zu unterbinden. Dabei wurden den Polyolefinen beispielsweise gemäß US-PS 4,274,932 sogenannte "mobilizing agents", wie z.B. Kohlenwasserstoffe, halogenierte Kohlenwasserstoffe, Phthalsäureester, Polymerfette, Pflanzenöle bzw. Siliconöle, bzw. gemäß EP-A-801.104 hochgradig amorphe Polypropylene zugesetzt. Diese Zusätze stellen zum Teil vor allem deshalb einen entscheidenden Nachteil dar, da sie als Fremdsubstanzen die Eigenschaften der Polyolefine in nicht vorhersehbarer Weise verändern, zusätzlichen Aufwand und Kosten verursachen und insbesondere bei der Verwendung im medizinisch - pharmazeutischen sowie im Lebensmittelbereich vor allem durch Migration ein hygienisches Problem darstellen.

Die Aufgabe der vorliegenden Erfindung lag demnach in der Verminderung bzw. Ausschaltung dieser Nachteile und vor allem, darin, weitere Polyolefinzusammensetzungen mit verbesserter Stabilität gegen ionisierende Strahlung bereitzustellen, ohne dabei allzu große Mengen an Fremdsubstanzen einsetzen zu müssen. Dieses Ziel konnte durch Zusatz von thermoplastischen Elastomeren zu den üblicherweise verwendeten Polyolefinen erreicht werden.

Gegenstand der Erfindung ist demnach die Verwendung von thermoplastischen Elastomeren aus der Gruppe der olefinischen Blockcopolymeren, Isoprenpolymeren, Isoprencopolymeren, Styrolpolymeren, Styrolcopolymeren und Polyurethanen, als Zusatzkomponente (Modifikator) zu Polyolefinen (Basispolymer) zur Verbesserung der Stabilität gegen ionisierende Strahlung.

Die erfindungsgemäß eingesetzten thermoplastischen Elastomere sind beispielsweise in "Thermoplastic Elastomers, A Comprehensive Review", Carl Hanser - Verlag, München 1987, in EP 683206 A1, EP 695781 A und WO 95/00566 beschrieben. Sie sind im wesentlichen aus harten und weichen Blöcken bzw. Segmenten aufgebaut, die sowohl aus kristallinen als auch aus amorphen Phasen bestehen.

Bevorzugt wird der Einsatz von Isopren-(Co)Polymeren, Styrol-(Co)Polymeren sowie olefinischen (Co)Polymeren und olefinischen Block-(Co)Polymeren, da diese mit Propylen-Polymeren verträglicher sind als thermoplastische Polyurethane (TPU). Besonders bevorzugt werden olefinische (Co)Polymere bzw. olefinische Block-(Co)Polymere eingesetzt, da diese aufgrund ihrer Zusammensetzung besonders gut verträglich sind mit Propylen-Polymeren. Weiters ist aufgrund des Fehlens der Styrol-Einheiten z.B. die Recyklierbarkeit deutlich verbessert.

Bei den besonders bevorzugten thermoplastischen Elastomeren handelt es sich beispielsweise um Ethylen-Ethylen/Propylen-Blockcopolymere, die z.B. aus kristallinen Polyethylenblöcken und amorphen Ethylen/Propylen-Blockcopolymerblöcken bestehen.
Besonders bevorzugt als thermoplastische Elastomere sind außerdem Blockcoplymere aus (a) Polyethylen-Blöcken mit einem Schmelzpunkt von 90 bis 120 °C und (b) Ethylen/α-Olefin-Copolymer-Blöcken. Solche Produkte werden z.B. von Fa. Kuraray/Japan hergestellt und vertrieben (XE 103).

Die thermoplastischen Elastomere (Modifikatoren) werden erfindungsgemäß zum Stabilisieren von Polyolefinen gegen den durch ionisierende Strahlen - insbesondere γ-Strahlen - induzierten Abbau eingesetzt. Bevorzugte Beispiele für solche Polyolefine sind Polymerisate von Mono- oder Diolefinen aus der Gruppe der Polyethylene, Polypropylene, Polybutene, Polyisobutene, Polycycloolefine, wie z.B. Cyclopenten oder Norbornen, sowie deren Copolymere mit α-Olefinen, und weiters Polyethylene wie z.B. LDPE, LLDPE, HDPE, ultrahochmolekulares HDPE. Weitere bevorzugte Basispolymere sind hochgradig isotaktische Polypropylene oder Copolymere des Propylens mit einem oder mehreren α-Olefinen und einem Propylenanteil von mindestens 50 Mol%, mit einem isotaktischen Index von über 90 und einem Schmelzflußindex (MFI 230/2,16) von 0,1 bis 100 g/10 min. Besonders bevorzugt sind hochgradig isotaktische Polypropylene oder Copolymere des Propylens mit einem oder mehreren α-Olefinen und einem Propylenanteil von mindestens 70 Mol%, einem isotaktischen Index von über 95 sowie einem Schmelzflußindex von 0,5 bis 50 g/10 min. Der isotaktische Index wurde mittels ¹³C-NMR gemessen, wie z.B. in Macromolecules 6(6)925-26(1973) bzw. EP-B-255.693 beschrieben. Als Copolymere des Propylens werden bevorzugt Random-Copolymere oder heterophasische Copolymere (Blockcopolymere) mit einem oder mehreren Comonomeren aus der Gruppe der C₂- und C₄-bis C₁₀-Olefine, wie etwa Ethylen, Buten, Hexen oder Decen, besonders bevorzugt mit Ethylen, verwendet. Die thermoplastischen Elastomere liegen im erfindungsgemäß stabilisierten Compound bevorzugt in einer Menge von 1 bis 60 Gew.%, bevorzugt von 1 bis 25 Gew.%, besonders bevorzugt von 2 bis 10 Gew.%, bezogen auf die gesamte Polymermenge, vor.

Die beispielhaft angeführten Polyolefine können nach bekannten Methoden radikalisch oder katalytisch, beispielsweise mit Hilfe von Ziegler/Natta-, Phillipsoder Metallocen-Katalysatoren hergestellt (polymerisiert) werden.
Weitere Beispiele für die genannten Polyolefine sind Mischungen der genannten Polymeren, wie etwa Mischungen aus Polypropylen mit Polyisobutylen, Polypropylen mit Polyethylen und Mischungen der verschiedenen Polyethylentypen. Weitere Polyolefine sind Copolymere und/oder Terpolymere von Mono- und Diolefinen untereinander oder mit anderen Vinylmonomeren, wie z.B. Ethylen-Propylen-Copolymeren, linearen Polyethylenen niedriger Dichte (LLDPE) und Mischungen der oben genannten Polyolefine.
Die erfindungsgemäß stabilisierten Polyolefine (Compounds) mit verbesserter Stabilität gegenüber ionisierender Strahlung können neben den thermoplastischen Elastomeren zusätzlich auch verschiedene herkömmliche Additive, wie beispielsweise Antioxidantien, UV-Stabilisatoren, Gleitmittel, Antiblockmittel, Antistatika, Farbmittel, chemische Degradiermittel und/oder Füll- und Verstärkungsstoffe enthalten.
Wesentlicher Unterschied solcher Compounds im Vergleich zu üblichen heterophasischen Propylen/Ethylen-Copolymeren (z.B. Daplen FSC 1012 von PCD Polymere) ist jener, daß bei konventionellen heterophasischen Copolymeren das Produkt aus einer kristallinen Polypropylen-Homopolymermatrix besteht, in der das amorphe Ethylen/Propylen-Copolymer (EPR) enthalten ist. Solche Produkte sind jedoch gegenüber ionisierender Strahlung nicht beständig.
Ein weiterer Gegenstand..der Erfindung ist ein Verfahren zur Verbesserung der Stabilität von Polyolefinen gegen ionisierende Strahlung, dadurch gekennzeichnet, daß den Polyolefinen (Basispolymer) thermoplastische Elastomere aus der Gruppe der olefinischen Blockcopolymeren, Isoprenpolymeren, Isoprencopolymeren, Styrolpolymeren, Styrolcopolymeren und Polyurethanen, als Zusatzkomponete (Modifikator) zugemischt werden. Dies erfolgt bevorzugt durch Mischen von Basispolymer und Modifikator in einem Kneter oder Mischer üblicher Bauweise bei Temperaturen zwischen 190 und 300 °C, bevorzugt zwischen 200 und 250 °C, unter Zusatz von üblichen Additiven, Stabilisatoren sowie eventuell von Nukleierungsmittel und gegebenenfalls organischer Peroxide zur Einstellung der Verarbeitbarkeit durch gezielte Degradation.
Als Stabilisatoren werden beispielsweise primäre (phenolische) und sekundäre (phosphitische) Antioxidantien, UV-Absorber und UV-Stabilisatoren vom "HALS"-Typ (sterisch gehinderte Amine), als Nukleierungsmitteln beispielsweise Talkum, Na-Benzoat, Sorbitolderivate und organische Phosphate eingesetzt.
Die erfindungsgemäß stabilisierten Polymermischungen können in bekannter Weise zu gewünschten Halbzeugen bzw. Fertigprodukten, beispielsweise zu Granulaten, Profilen, Platten, Folien, Spritzguß- bzw. Extrusionsteilen mit verbesserter Stabilität gegen ionisierende Strahlung weiterverarbeitet werden.

### Beispiele:

Als Basispolymer wurde ein PP-Homopolymerpulver mit einem MFI von 0,5 g/10 min entsprechend Daplen BE 50 von Fa. PCD Polymere eingesetzt.
Als Modifikator wurde ein Ethylen/Ethylen-Propylen-Blockcopolymer mit einem Schmelzindex von 2 g/10 min und einem Schmelzpunkt der kristallinen Phase von 101 °C mit einer amorphen und einer kristallinen Phase (XE 103, Fa. Kuraray/Japan) eingesetzt.
Folgende Stabilisatoren und Additive kamen zum Einsatz:
Irganox 1010, Fa. Ciba Geigy
(Pentaerythrityl-tetrakis[3-(3,5-di-tert.butyl-4-hydroxyphenyl)-propionat] als primäres (phenolisches) Antioxidans
Irgafos 168, Fa. Ciba Geigy
(Tris-(2,4-di-tert.butylphenyl)-phosphit als sekundäres (phosphitisches) Antioxidans Hostanox 03, Fa. Hoechst AG
(Bis[3,3-bis(4'-hydroxy-3'-tert.butylphenyl)-butansäure]-glykolester) als primäres (phenolisches) Antioxidans
Ultranox 626, Fa. General Electric Co.
(Bis(4,4-di-tert.butylphenyl)-pentaerythritol-diphosphit) als sekundäres (phosphitisches) Antioxidans
Ölsäureamid (Fa. Unichema) als Gleitmittel.

Die Verarbeitbarkeit der Systeme wurde über den Schmelzindex (MFI, melt flow rate) gemäß ISO 1133 / DIN 53735 bei 230 °C und einer Belastung von 2,16 kg bestimmt. Die Mechanik der Systeme (Mischungen und Referenzmaterialien) wurde an im Spritzguß (gemäß DIN 16774 (1988) bei einer Massetemperatur von 250 °C und Formtemperatur von 30 °C) hergestellten Probekörpern im Zugversuch bei +23 °C am gespritzten Schulterstab F3/3 gemäß DIN 53455 (1981) für die Zugfestigkeit bestimmt. Als Ausgangswert für die Stabilitätsuntersuchungen wurde jeweils ein Nullwert an unbestrahlten Probekörpern bestimmt.
Weiters wurde bei einigen Mischungen die Kerbschlagzähigkeit bei +23 °C (ISO 179 1eA, Kerbradius 0,25 mm) am Normstab B vor und nach der Bestrahlung geprüft.
Zur Untersuchung der Stabilität gegen ionisierende Strahlung wurden die Probekörper einer γ-Strahlung mit einer Dosis von 5 Mrad ausgesetzt und in der Folge gelagert. Die Lagerung erfolgte bei +50 °C, um den Prozeß gegenüber Raumtemperatur noch zusätzlich zu beschleunigen. Der Abbauprozeß wird nämlich durch die Strahlung zwar gestartet, es dauert in der Folge allerdings noch längere Zeit, bis negative Effekte deutlich erkennbar werden. Die Entnahmen aus der Lagerung (bei +50 °C) und anschließenden Prüfungen (bei +23 °C) erfolgten nach 3, 30, 60, 90, 120, 180 und 240 Tagen (also im Zeitraum von 8 Monaten).

### Beispiele 1 bis 6 und Vergleichsbeispiele V1 bis V4

Die Herstellung der Mischungen (Compounds) erfolgte jeweils durch Mischen der Pulver bzw. Granulate im entsprechenden Gewichtsverhältnis sowie unter Zusatz entsprechender Mengen von Stabilisatoren und einem organischen Peroxid (Bis(1,1dimethylethyl)-peroxyisopropyl)benzol = Perkadox 14 Sfl, Fa. AKZO NOBEL), wie in Tabelle 1 zusammengestellt. Die Angaben in Tabelle 1 sind Gew.%, bezogen auf die gesamte Mischung, wobei die Menge des Basispolymers dem Rest auf 100 % der Mischung entspricht. Die Mischung wurde dann auf einem COLLIN-Zweischneckenextruder mit 25 mm Schneckendurchmesser bei 200-240 °C aufgeschmolzen und mit einem Ausstoß von 4 kg/h über zwei Runddüsen zu Strängen von je 3 mm extrudiert. Die Verweilzeit im Extruder betrug etwa 20 s. Der Strang wurde nach Erstarrung im Wasserbad granuliert. Der MFI der erhaltenen Granulate ist ebenfalls in Tabelle 1 angeführt.

Die mechanischen Eigenschaften der Mischungen sind in Tabelle 2 zusammengefaßt. Unter "rel" sind die Relativwerte bezogen auf die Nullprüfung angeführt. Es zeigt sich, daß der Zusatz von thermoplastischen Elastomeren zu einem Propylen-Homopolymer auch ohne weitere Zusätze von bekannten "Stabilisatoren" gegen den schädlichen Einfluß von ionisierender Strahlung ein deutlich verbessertes Eigenschaftsprofil als die Vergleichsbeispiele aufweist. Die Zugfestigkeit nach Bestrahlung von 5,0 Mrad und mehrmonatiger Lagerung bei 50 °C liegt immer noch auf dem Ausgangsniveau. Weiter verdeutlicht wird die Wirksamkeit der zugesetzten thermoplastischen Elastomeren durch die Ergebnisse der Prüfung der Zugfestigkeit und der Kerbschlagzähigkeit. Hier liegen die mit thermoplastischen Elastomeren modifizierten Mischungen wesentlich besser als ein Propylen-Homopolymer (auf Basis Daplen PT 551) oder ein konventionelles heterophasisches Propylen-Ethylen-Copolymer (auf Basis Daplen FSC 1012).

**Tabelle 1 -**

| Zusammensetzung der Mischungen (Gew.%) | | | | | | | | | |
|---|---|---|---|---|---|---|---|---|---|
| Bsp. | Irg. 1010 | Host. 03 | Irg. 168 | U. 626 | ÖSA | 2425K | XE-103 | Basis-polymer | MFI(230/2,16) [g/10min] |
| V1 | 0,05 | | 0,05 | | | | | PP-Homo*) | 20 |
| V2 | | 0,05 | | 0,05 | 0,35 | | | PP-Homo | 20 |
| V3 | | 0,05 | | 0,05 | | 4 | | PP-Homo | 20 |
| V4 | | 0,05 | | 0,05 | | | | HECO**) | 5 |
| | | | | | | | | | |
| 1,2 | | 0,05 | | 0,05 | | | 4 | PP-Homo | 20 |
| 3 | | 0,05 | | 0,05 | | | 1 | PP-Homo | 20 |
| 4 | | 0,05 | | 0,05 | | | 2 | PP-Homo | 20 |
| 5 | | 0,05 | | 0,05 | | | 8 | PP-Homo | 20 |
| 6 | | 0,05 | | 0,05 | | | 16 | PP-Homo | 20 |

| | | | | | | | | | |
|---|---|---|---|---|---|---|---|---|---|
| *) Propylenhomopolymer (entspr. Daplen PT 551) | | | | | | | | | |
| **) heterophasisches Propylen/Ethylen-Copolymer (entspr. Daplen FSC 1012) | | | | | | | | | |

- Irg. 1010: Irganox 1010
- Host. 03: Hostanox 03
- Irg. 168: Irgafos 168
- U.626: Ultranox 626
- ÖSA: Ölsäureamid
- 2425 K: Polyethylen, Daplen LDPE 2425 K von Fa. PCD Polymere
- XE-103: thermoplastisches. Elastomer von Fa. Kuraray

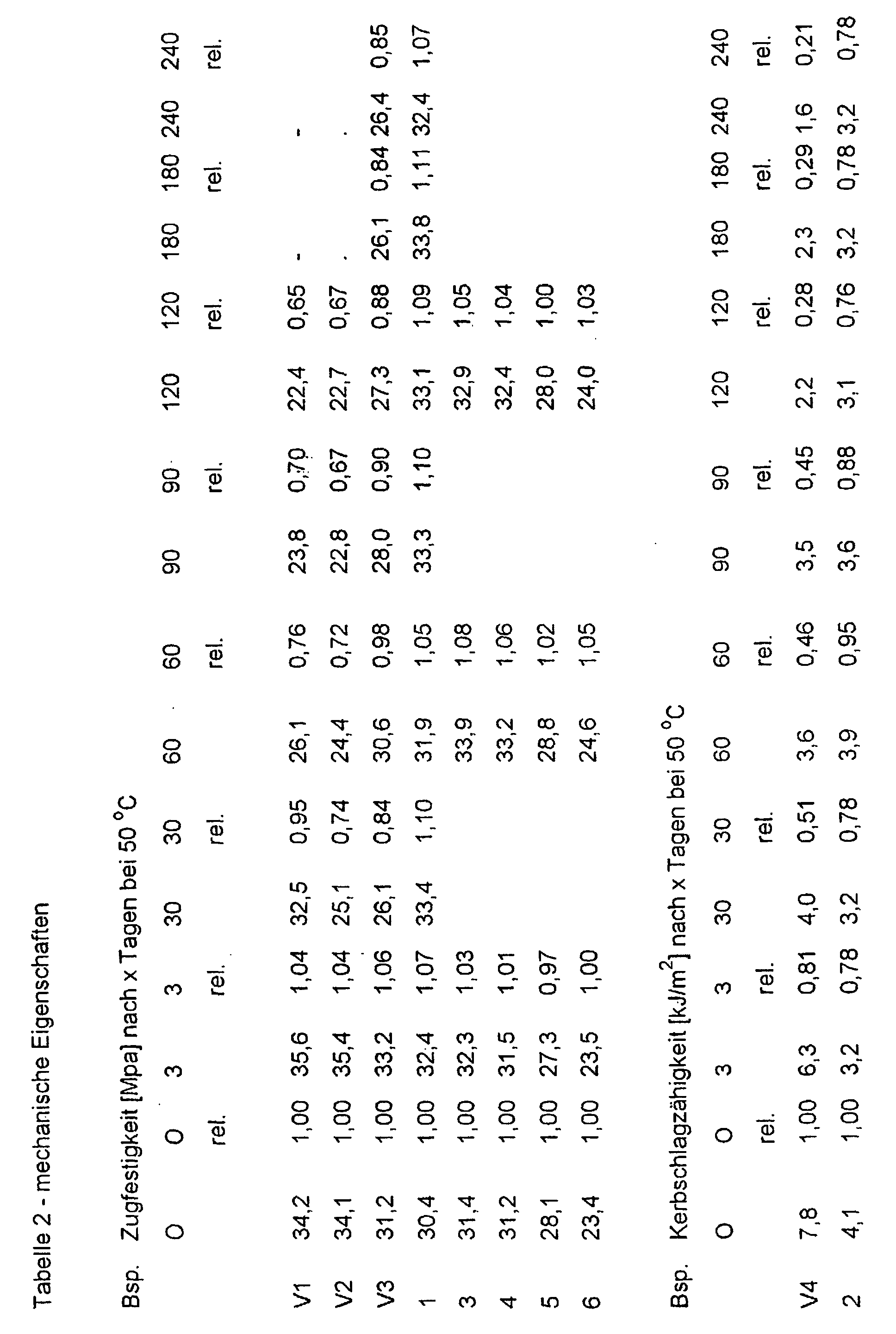

## Patentansprüche

1. Verwendung von thermoplastischen Elastomeren aus der Gruppe der olefinischen Blockcopolymeren, Isoprenpolymeren, Isoprencopolymeren, Styrolpolymeren, Styrolcopolymeren und Polyurethanen, als Zusatzkomponente (Modifikator) zu Polyolefinen (Basispolymer) zur Verbesserung der Stabilität gegen ionisierende Strahlung.

2. Verwendung gemäß Anspruch 1, **dadurch gekennzeichnet, daß** die thermoplastischen Elastomere olefinische Blockcopolymere sind.

3. Verwendung gemäß Anspruch 2, **dadurch gekennzeichnet, daß** die thermoplastischen Elastomere Blockcopolymere bestehend aus
a) Polyethylen-Blöcken mit einem Schmelzpunkt von 90 bis 120 °C und
b) Ethylen/α-Olefin-Copolymer-Blöcken sind.

4. Verwendung gemäß einem der Ansprüche 1 bis 3, **dadurch gekennzeichnet, daß** die die als Basispolymere eingesetzten Polyolefine Polymerisate von Mono- oder Diolefinen aus der Gruppe der Polyethylene, Polypropylene, Polybutene, Polyisobutene, Polycycloolefine, sowie deren Copolymere mit α-Olefinen sind.

5. Verwendung gemäß Anspruch 4, **dadurch gekennzeichnet, daß** die als Basispolymere eingesetzten Polyolefine hochgradig isotaktische Polypropylene oder Copolymere des Propylens mit einem oder mehreren α-Olefinen und einem Propylenanteil von mindestens 50 Mol%, mit einem isotaktischen Index von über 90 und einem Schmelzflußindex von 0,1 bis 100 g/10 min sind.

6. Verwendung gemäß Anspruch 5, **dadurch gekennzeichnet, daß** die als Basispolymere eingesetzten Polyolefine hochgradig isotaktische Polypropylene oder Copolymere des Propylens mit einem oder mehreren α-Olefinen und einem Propylenanteil von mindestens 70 Mol% sind und einen isotaktischen Index von über 95 sowie einem Schmelzflußindex von 0,5 bis 50 g/10 min aufweisen.

7. Verwendung gemäß einem der Ansprüche 1 bis 6, **dadurch gekennzeichnet, daß** als Copolymere des Propylens Random-Copolymere oder heterophasische Copolymere mit einem oder mehreren Comonomeren aus der Gruppe der C₂und C₄-bis C₁₀-Olefine verwendet werden.

8. Verwendung gemäß Anspruch 7, **dadurch gekennzeichnet, daß** als Comonomer Ethylen verwendet wird.

9. Verwendung gemäß einem der Ansprüche 1 bis 8, **dadurch gekennzeichnet, daß** die thermoplastischen Elastomere in einer Menge von 1 bis 60 Gew.%, bevorzugt von 1 bis 25 Gew.%, besonders bevorzugt von 2 bis 10 Gew.%, bezogen auf die gesamte Polymermenge, vorliegen.

10. Verfahren zur Verbesserung der Stabilität von Polyolefinen gegen ionisierende Strahlung, **dadurch gekennzeichnet, daß** den Polyolefinen (Basispolymer) thermoplastische Elastomere aus der Gruppe der olefinischen Blockcopolymeren, Isoprenpolymeren, Isoprencopolymeren, Styrolpolymeren, Styrolcopolymeren und Polyurethanen, als Zusatzkomponente (Modifikator) zugemischt werden.

## Claims

1. The use of thermoplastic elastomers selected from the class consisting of olefinic block copolymers, isoprene polymers, isoprene copolymers, styrene polymers, styrene copolymers and polyurethanes as additional component (modifier) added to polyolefins (base polymer) for improving stability to ionizing radiation.

2. The use as claimed in Claim 1, **characterized in that** the thermoplastic elastomers are olefinic block copolymers.

3. The use as claimed in Claim 2, **characterized in that** the thermoplastic elastomers are block copolymers composed of
a) polyethylene blocks having a melting point of from 90 to 120°C and
b) ethylene-α-olefin copolymer blocks.

4. The use as claimed in one of Claims 1 to 3, **characterized in that** the polyolefins used as base polymers are polymers of mono- or diolefins selected from the class consisting of polyethylenes, polypropylenes, polybutenes, polyisobutenes, polycycloolefins and also copolymers of these with α-olefins.

5. The use as claimed in Claim 4, **characterized in that** the polyolefins used as base polymers are highly isotactic polypropylene or copolymers of propylene with one or more α-olefins and with a proportion of propylene of at least 50 mol%, with an isotactic index of greater than 90 and a melt flow index of from 0.1 to 100 g/10 min.

6. The use as claimed in Claim 5, **characterized in that** the polyolefins used as base polymers are highly isotactic polypropylenes or copolymers of propylene with one or more α-olefins and with a proportion of propylene of at least 70 mol% and has an isotactic index of greater than 95 and a melt flow index of from 0.5 to 50 g/10 min.

7. The use as claimed in one of Claims 1 to 6, **characterized in that** the copolymers of propylene are random copolymers or heterophasic copolymers with one or more comonomers selected from the class consisting of C₂ olefins and C₄-C₁₀ olefins.

8. The use as claimed in Claim 7, **characterized in that** ethylene is used as comonomer.

9. The use as claimed in one of Claims 1 to 8, **characterized in that** the thermoplastic elastomers are used in an amount of from 1 to 60% by weight, preferably from 1 to 25% by weight, particularly preferably from 2 to 10% by weight, based on the total amount of polymer.

10. A process for improving the stability of polyolefins to ionizing radiation, **characterized in that** it comprises admixing with the polyolefins (base polymer), as additional component (modifier), thermoplastic elastomers selected from the class consisting of olefinic block copolymers, isoprene polymers, isoprene copolymers, styrene polymers, styrene copolymers and polyurethanes.

## Revendications

1. Utilisation d'élastomères thermoplastiques parmi le groupe constitué de copolymères bloques oléfiniques, de polymères de l'isoprène, de copolymères de l'isoprène, de polymères du styrène, de copolymères du styrène et de polyuréthanes, en tant que composant ajouté (modificateur) à des polyoléfines (polymère de base) en vue d'améliorer la stabilité vis-à-vis d'un rayonnement ionisant.

2. Utilisation selon la revendication 1, **caractérisée en ce que** les élastomères thermoplastiques sont des copolymères bloques oléfiniques.

3. Utilisation selon la revendication 2, **caractérisée en ce que** les élastomères thermoplastiques sont des copolymères bloques constitués de
a) des bloques polyéthylènes présentant un point de fusion de 90 à 120°C et
b) des bloques copolymères éthylène/α-oléfine.

4. Utilisation selon l'une quelconque des revendications 1 à 3, **caractérisée en ce que** les polyoléfines utilisées en tant que polymères de base sont des polymères de mono- ou dioléfines parmi le groupe constitué de polyéthylènes, de polypropylènes, de polybutènes, de polyisobutènes, de polycyclo-oléfines ainsi que de leurs copolymères avec des α-oléfines.

5. Utilisation selon la revendication 4, **caractérisée en ce que** les polyoléfines utilisées en tant que polymères de base sont des polypropylènes hautement isotactiques ou des copolymères du propylène avec une ou plusieurs α-oléfines et une proportion de propylène d'au moins 50% en moles, présentant un indice isotactique supérieur à 90 et un indice de fluidité de 0,1 à 100 g/10 min.

6. Utilisation selon la revendication 5, **caractérisée en ce que** les polyoléfines utilisées en tant que polymères de base sont des polypropylènes hautement isotactiques ou des copolymères du propylène avec une ou plusieurs α-oléfines et une proportion de propylène d'au moins 70% en moles, présentant un indice isotactique supérieur à 95 et un indice de fluidité de 0,5 à 50 g/10 min.

7. Utilisation selon l'une quelconque des revendications 1 à 6, **caractérisée en ce que** l'on utilise, en tant que copolymères du propylène, des copolymères statistiques ou des copolymères hétéro-phasiques avec un ou plusieurs comonomères parmi le groupe constitué d'oléfines en C₂ et C₄-C₁₀.

8. Utilisation selon la revendication 7, **caractérisée en ce que** l'on utilise l'éthylène en tant que comonomère.

9. Utilisation selon l'une quelconque des revendications 1 à 8, **caractérisée en ce que** les élastomères thermoplastiques sont présents en une quantité de 1 à 60% en poids, de préférence de 1 à 25% en poids, particulièrement préférablement de 2 à 10% en poids, par rapport à la quantité totale de polymère.

10. Procédé d'amélioration de la stabilité de polyoléfines vis-à-vis d'un rayonnement ionisant, **caractérisé en ce que** des elastomères thermoplastiques parmi le groupe constitué de copolymères bloques oléfiniques, de polymères de l'isoprène, de copolymères de l'isoprène, de polymères du styrène, de copolymères du styrène et de polyuréthanes sont mélangés aux polyoléfines (polymères de base) en tant que composant ajouté (modificateur).
